# FASCICULE DE BREVET EUROPEEN

(11) **EP 3 139 050 B1**
(45) Date de publication et mention de la délivrance du brevet: **28.02.2018**
(21) Numéro de dépôt: 16180080.0
(22) Date de dépôt: 19.07.2016
(51) Int. Cl.: F16C 1/14, F16C 1/20, F16C 1/16, F16C 1/28, F16C 1/26

(54) **COMMANDE A ROULEMENT, SYSTEME MECANIQUE ET AERONEF**
ROLLANTRIEBSSTEUERUNG, MECHANISCHES SYSTEM UND LUFTFAHRZEUG
A BALL-BEARING CONTROL CABLE, A MECHANICAL SYSTEM, AND AN AIRCRAFT

(30) Priorité: 07.09.2015 FR 1501841
(43) Date de publication de la demande: 08.03.2017
(73) Titulaire: Airbus Helicopters, 13725 Marignane Cedex (FR)
(72) Inventeur: BIHEL, Jean-Romain, 13740 LE ROVE (FR)
(74) Mandataire: Pouillot, Laurent Pierre Paul

(56) Documents cités:
- EP-A1- 0 933 541
- DE-A1- 1 525 215
- DE-U- 6 608 858
- FR-A- 360 475
- FR-A- 366 246
- FR-A1- 2 508 197
- US-A- 2 369 332
- US-A- 3 464 287
- US-A- 5 722 301

## Description

La présente invention concerne une commande à roulement, un système mécanique pourvu d'une telle commande à roulement, et un aéronef comprenant un tel système mécanique.

L'invention se situe donc dans le domaine technique des commandes à roulement. Une telle commande à roulement est aussi dénommée « gaine à billes » ou « commande à billes » par l'homme du métier.

Un système mécanique peut comporter une commande à roulement pour transmettre des efforts de traction ou de compression.

Par exemple, un aéronef comporte parfois des commandes à roulement dans une chaîne de transmission du mouvement contrôlant un organe de direction de cet aéronef. A titre illustratif, un hélicoptère peut comporter des servocommandes pour contrôler le pas des pales du rotor de sustentation et de propulsion de l'hélicoptère. Ces servocommandes sont alors commandées par des chaînes de transmission du mouvement reliées à un manche dit « manche cyclique » et à un levier dit « levier de pas collectif ». Ces chaînes de transmission du mouvement peuvent alors comprendre des commandes à roulement.

Une commande à roulement comporte usuellement une lamelle centrale mobile guidée axialement par des billes dans une gaine extérieure, tout en permettant à la lamelle centrale et à la gaine extérieure de suivre des trajets sinueux.

La lamelle centrale s'étend entre deux organes à relier mécaniquement pour transmettre un effort de traction ou de compression d'un organe vers l'autre organe. Ainsi, la lamelle centrale s'étend longitudinalement d'une première extrémité solidarisée à un premier organe vers une deuxième extrémité solidarisée à un deuxième organe.

En outre, la lamelle centrale traverse l'intérieur de la gaine extérieure de part en part pour être reliée au premier organe et au deuxième organe. Cette gaine extérieure comprend par exemple un tube en métal flexible recouvert d'un tube de protection en plastique.

De plus, la lamelle centrale est mobile par rapport à la gaine extérieure en étant guidée axialement par des billes. Dès lors, la commande à roulement comporte deux rangées de billes agencées dans la gaine extérieure de part et d'autre de la lamelle centrale. Chaque rangée de billes comprend usuellement une structure allongée définissant des cages, chaque bille étant agencée dans une cage.

Par suite, une première rangée de billes est agencée au sein de la gaine extérieure entre une face supérieure de la lamelle centrale et une éclisse supérieure. Une deuxième rangée de billes est agencée au sein de la gaine extérieure entre une face inférieure de la lamelle centrale et une éclisse inférieure. Les billes peuvent en outre rouler dans des gorges ménagées dans la face inférieure et la face supérieure de la lamelle centrale.

Par ailleurs, la commande à roulement peut comporter un embout interposé entre la gaine extérieure et la lamelle centrale pour notamment bloquer les billes dans la gaine extérieure.

Selon le document US 5722301, un tel embout comporte un tube prolongeant la gaine extérieure. Ce tube s'étend longitudinalement de la gaine extérieure vers un bord retombé serrant un tuyau. Ce tuyau est disposé autour d'une extrémité de la lamelle centrale.

Par ailleurs, une bague agencée dans le tube de l'embout entoure la lamelle centrale et bloque les rangées de billes en translation longitudinale.

Une telle commande à roulement est suffisamment rigide longitudinalement pour permettre la transmission d'un effort de traction ou de compression d'un organe vers un autre organe. De plus, la commande à roulement présente une souplesse suffisante transversalement pour suivre une trajectoire sinueuse.

Des commandes à roulement sont dans ce contexte utilisées notamment sur un hélicoptère à la place de bielles rigides. En particulier, les commandes à roulement sont parfois interposées dans une chaîne de transmission du mouvement pour contrôler un système hydraulique et notamment une servocommande. Le déplacement d'une commande de vol induit alors le déplacement d'une lamelle centrale d'une commande à roulement, ce déplacement de la lamelle centrale induisant la manoeuvre de la servocommande.

Ces commandes à roulement sont néanmoins susceptibles de subir des efforts destructeurs en cas d'immobilisation d'un organe de la chaîne de transmission du mouvement. Par exemple, un levier d'entrée d'une servocommande peut être immobile en l'absence d'assistance hydraulique. Le déplacement d'une commande de vol induit alors la création d'un effort de traction ou de compression exercé sur la lamelle centrale. Cet effort peut générer un effort dans la gaine extérieure susceptible de détériorer cette gaine extérieure.

Le document FR 1403706 est éloigné de ce problème. En effet, le document FR 1403706 décrit une cage d'espacement d'un corps de roulement.

Le document FR 2576070 présente une commande à roulement.

Les documents FR 2508197, FR 366246, DE 1525215, US 2369332, US 3464287, EP 0933541, FR 360475 et DE 6608858 sont aussi connus.

La présente invention a alors pour objet de proposer une commande à roulement alternative pour tendre à augmenter la durée de vie d'une gaine extérieure en cas de sollicitations extrêmes de la lamelle centrale.

Selon l'invention, une commande à roulement est équipée d'une gaine extérieure entourant une lamelle centrale mobile longitudinalement par rapport à la gaine extérieure, la lamelle centrale étant agencée entre deux rangées d'organes de roulement, chaque rangée d'organes de roulement étant agencée entre une face de la lamelle centrale et une éclisse qui est en regard d'une face interne de la gaine extérieure. La gaine extérieure comporte une portion centrale s'étendant entre deux embouts, et en particulier entre un embout dit « premier embout » et un embout dit « deuxième embout ».

En outre, chaque embout comporte un corps central creux qui entoure la lamelle centrale, chaque corps central s'étendant longitudinalement au moins d'une butée dite « butée proximale » vers une butée dite « butée distale » libre, chaque butée d'un embout saillant du corps central de cet embout vers un milieu extérieur à la commande à roulement, chaque embout comportant un système élastique interposé autour du corps central de cet embout entre une butée de l'embout et une bague, chaque bague étant agencée autour du corps central de l'embout associé, chaque embout étant mobile en translation par rapport à la bague entourant cet embout, le système élastique d'un embout étant agencé entre la butée distale et la bague de cet embout et le système élastique de l'autre embout étant agencé entre la butée proximale et la bague de cet autre embout.

Le terme « longitudinalement » fait référence à la ligne selon laquelle s'étend la lamelle centrale pour traverser la gaine extérieure. Le terme « transversalement » utilisé par la suite fait référence à une direction perpendiculaire à cette ligne. Dans le cadre d'une gaine extérieure cylindrique, le terme « longitudinal » fait référence à l'axe de symétrie de la gaine extérieure, et le terme « transversalement » a des rayons de la gaine extérieure.

L'expression « corps central s'étendant longitudinalement au moins d'une butée dite « butée proximale » vers une butée dite « butée distale » » signifie que le corps central s'étend au minimum entre les butées, le corps central pouvant aussi s'étendre longitudinalement en dehors des butées.

Les bagues sont en outre aptes à être attachées à une structure. Par exemple, les bagues sont articulées à cette structure.

Par suite, la gaine extérieure comprend une portion centrale aboutée à deux embouts. Ces embouts sont par exemple sertis à la portion centrale.

En outre, chaque système élastique tend à laisser une liberté de mouvement à un embout par rapport à une bague.

Dès lors et en quittant une position d'équilibre, chaque embout peut coulisser par rapport à la bague disposée autour du corps central de cet embout selon au moins un sens. En quittant une position d'équilibre, le sens de coulissement d'un embout par rapport à une bague est de plus par construction sensiblement opposé voire similaire au sens de coulissement de l'autre embout selon la réalisation et le dysfonctionnement observé. Les deux embouts sont donc aptes à coulisser par rapport à une bague respectivement selon deux sens opposés.

Par conséquent, l'invention propose une solution simple, adaptée notamment aux commandes de vol d'un hélicoptère soumises à des possibilités d'arrêt d'assistance hydraulique et d'importants efforts de commande.

En effet, les embouts permettent d'apporter de la souplesse à la gaine extérieure afin de lui accorder la possibilité d'un débattement supplémentaire en cas de sollicitation extrême.

Si la lamelle centrale se déforme sous un effort de traction ou de compression, par exemple suite à une panne hydraulique, les embouts offrent une liberté de mouvement à la gaine extérieure. En particulier, lorsque la lamelle centrale subit un effort de traction, la gaine extérieure peut se déplacer en translation par rapport à une bague en comprimant le système élastique en appui contre cette bague. Lorsque la lamelle centrale subit au contraire un effort de compression, la gaine extérieure peut se déplacer en translation par rapport à l'autre bague en comprimant le système élastique en appui contre cette autre bague.

Cette liberté de mouvement de la gaine extérieure tend alors à réduire les efforts exercés sur la gaine extérieure pour optimiser sa durée de vie.

La commande à roulement peut en outre comporter une ou plusieurs des caractéristiques qui suivent.

Ainsi, chaque rangée d'organes de roulement peut s'étendre entre le premier embout et le deuxième embout.

De même, chaque éclisse peut s'étendre entre le premier embout et le deuxième embout.

Les deux embouts permettent de maintenir en place les éclisses et/ou les rangées d'organes de roulement à l'intérieur de la gaine extérieure.

Par ailleurs, au moins une bague peut être une bague à portée sphérique d'une articulation à rotule. La bague est alors agencée dans une cage extérieure sphérique solidarisée à une structure porteuse.

Une telle bague présente ainsi trois degrés de liberté en rotation.

Selon un autre aspect, l'expression « système élastique » désigne un système se déformant élastiquement et tendant à revenir dans une position d'équilibre suite à une déformation.

Selon un premier mode de réalisation, au moins un des systèmes élastiques comporte un organe élastique s'étendant entre une butée d'un embout et la bague entourant cet embout.

L'expression « organe élastique » désigne un ressort ou un bloc de matière élastique, tel qu'un cylindre en élastomère.

Selon un deuxième mode de réalisation, le système élastique comporte une boîte élastique.

Dès lors, au moins une bague comportant une mâchoire munie d'une surface d'arrêt dite « surface d'arrêt distale » et d'une surface d'arrêt dite « surface d'arrêt proximale », au moins un desdits systèmes élastiques comporte un organe élastique interne ainsi qu'un organe élastique externe et un coulisseau, ledit organe élastique interne et ledit organe élastique externe s'étendant à partir dudit coulisseau selon un même sens, l'organe élastique interne s'étendant entre le coulisseau et une butée d'un embout et ledit organe élastique externe s'étendant entre ledit coulisseau et une surface d'arrêt d'une mâchoire.

L'organe élastique interne et l'organe élastique externe peuvent prendre la forme d'un ressort ou d'un bloc de matière élastique.

Ce deuxième mode de réalisation tend non seulement à protéger la gaine en cas de blocage d'une pièce mécanique reliée à la commande à roulement, mais tend aussi à permettre le fonctionnement de la commande à roulement en cas de grippage d'organes de roulement internes à cette commande à roulement.

En cas de blocage d'une pièce mécanique reliée à la commande, les embouts se déplacent selon des sens contraires.

Par contre, en cas de grippage d'organes de roulement internes à cette commande à roulement, les embouts se déplacent selon des sens similaires.

Par exemple, un organe élastique interne dit « premier organe élastique interne » s'étend entre un coulisseau dit « premier coulisseau » et la butée distale du premier embout pour tendre à pousser ce premier coulisseau contre la butée proximale du premier embout, un organe élastique externe dit « premier organe élastique externe » s'étendant entre ledit premier coulisseau et une surface d'arrêt distale d'une mâchoire dite « première mâchoire » pour tendre à pousser ce premier coulisseau contre la surface d'arrêt proximale de la première mâchoire.

De plus, un organe élastique interne dit « deuxième organe élastique interne » s'étend entre un coulisseau dit « deuxième coulisseau » et la butée proximale du deuxième embout pour tendre à pousser ce deuxième coulisseau contre la butée distale du deuxième embout, un organe élastique externe dit « deuxième organe élastique externe » s'étendant entre ledit deuxième coulisseau et une surface d'arrêt proximale d'une mâchoire dite « deuxième mâchoire » pour tendre à pousser ce deuxième coulisseau contre la surface d'arrêt distale de la deuxième mâchoire.

Par ailleurs, ladite portion centrale est par exemple flexible, chaque corps central étant rigide.

Les raideurs de la portion centrale et des corps centraux sont ainsi définies par des caractéristiques relatives. La portion centrale est flexible dans le sens où cette portion centrale peut se tordre lorsque la lamelle centrale est sollicitée. Par contre, les corps centraux des embouts sont rigides et ne se tordent pas.

Par ailleurs, la lamelle centrale peut présenter un tronçon intermédiaire s'étendant en épaisseur d'une face supérieure en regard d'une première rangée d'organes de roulement vers une face inférieure en regard de l'autre rangée d'organes de roulement, ledit tronçon intermédiaire présentant une première épaisseur entre ladite face inférieure et ladite face supérieure, ledit tronçon intermédiaire s'étendant entre deux tronçons extrémaux de la lamelle centrale, chaque tronçon extrémal présentant une deuxième épaisseur supérieure à la première épaisseur.

Cette caractéristique favorise une déformation de la lamelle centrale entre les tronçons extrémaux lorsque cette lamelle centrale est sollicitée en traction ou compression.

Eventuellement, chaque tronçon extrémal saille en dehors d'un embout.

Par ailleurs, chaque corps central comprenant un cylindre s'étendant en épaisseur d'une face intérieure dirigée vers la lamelle centrale vers une face extérieure, la face extérieure décrivant un cercle présentant un diamètre dit « diamètre central », au moins une butée comporte un anneau inscrit dans un cercle présentant un diamètre dit « diamètre externe », ledit diamètre externe étant supérieur au diamètre central.

Chaque butée saille alors radialement du corps central correspondant.

Outre une commande à roulement, l'invention concerne un système mécanique muni d'une commande à roulement qui est interposée entre une première section et une deuxième section d'une chaîne de transmission d'un mouvement.

La commande à roulement est du type décrit précédemment, la butée distale libre d'un embout étant en regard de la première section et la butée distale libre de l'autre embout étant en regard de la deuxième section, la lamelle centrale étant solidaire de la première section et de la deuxième section.

L'expression « système mécanique » désigne un système au moins partiellement mécanique. Le système mécanique peut par exemple comprendre des organes électriques, mécaniques, pneumatiques ou hydrauliques dans la première section et/ou dans la deuxième section.

La première section peut être une section menante transmettant un mouvement à la deuxième section au travers de la commande à roulement. De manière alternative, la deuxième section peut être une section menante transmettant un mouvement à la première section au travers de la commande à roulement.

Par ailleurs, aucun embout n'est par exemple en contact avec la première section et la deuxième section. L'espace séparant un embout de la première section ou de la deuxième section de la chaîne de transmission du mouvement permet le cas échéant à cet embout de se déplacer.

Enfin, l'invention vise un aéronef comportant un tel système mécanique.

L'invention et ses avantages apparaîtront avec plus de détails dans le cadre de la description qui suit avec des exemples de réalisations donnés à titre illustratif en référence aux figures annexées qui représentent :
- la figure 1, un schéma illustrant un aéronef selon l'invention,
- la figure 2, un schéma illustrant une commande à roulement selon un premier mode de réalisation de l'invention,
- la figure 3, une coupe de la commande à roulement selon la figure 2 dans une section centrale,
- les figures 4 à 5, des schémas illustrant le fonctionnement de l'invention selon le premier mode de réalisation, et
- la figure 6, un schéma illustrant une commande à roulement selon un deuxième mode de réalisation de l'invention.

Les éléments présents dans plusieurs figures distinctes sont affectés d'une seule et même référence.

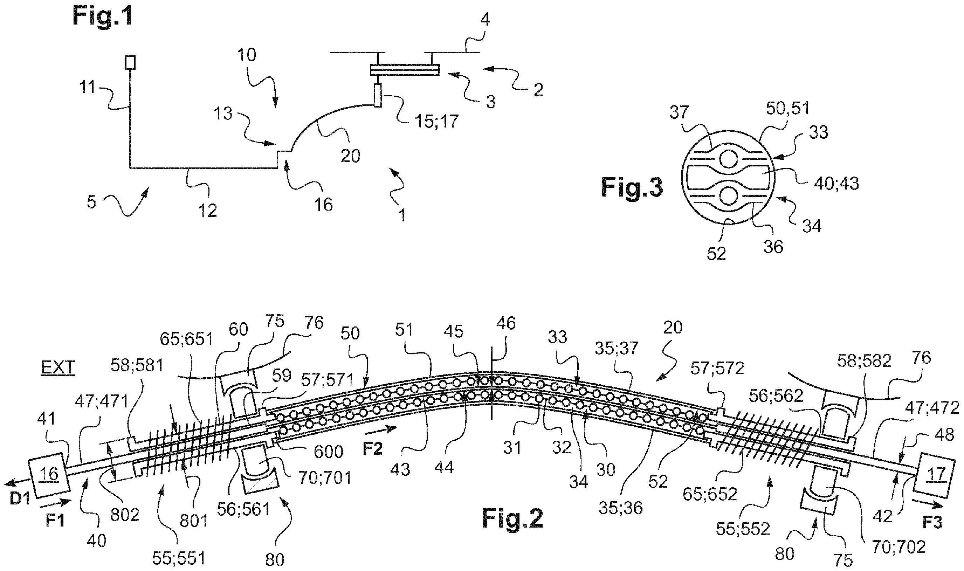

La figure 1 présente un aéronef 1 selon l'invention.

En particulier, cet aéronef 1 comporte un rotor 2 participant au moins partiellement à la sustentation et/ou à la propulsion de cet aéronef. Un tel rotor 2 peut comporter une pluralité de pales 4 à pas variable. Dès lors, le rotor 2 comporte un ensemble de plateaux de commande 3 aptes à contrôler le pas des pales.

Par ailleurs, l'aéronef 1 comporte un système mécanique 5 selon l'invention.

Ce système mécanique 5 est alors muni d'une commande à roulement 20 selon l'invention. La commande à roulement 20 est agencée entre une première section 16 et une deuxième section 17 d'une chaîne de transmission d'un mouvement 10.

Par exemple mais non exclusivement, la première section 16 est une section amont transmettant un mouvement à la commande à roulement 20. La deuxième section 17 est alors une section aval déplacée par la commande à roulement 20.

Par ailleurs, le système mécanique 5 est éventuellement un système permettant de contrôler le pas des pales 4 du rotor 2. Dès lors, la chaîne de transmission d'un mouvement 10 peut comporter au moins un moyen de commande 11, au moins une bielle 12, au moins une commande à roulement 20, au moins un moyen de renvoi 13 et une servocommande 15 reliée à l'ensemble de plateaux de commande 3.

Selon l'exemple de la figure 1, une commande à roulement 20 est reliée à une première section 16 comprenant successivement un moyen de commande 11, une bielle 12, un moyen de renvoi 13. La commande à roulement est alors fixée au moyen de renvoi 13.

De plus, la commande à roulement 20 est reliée à une deuxième section 17 comprenant la servocommande 15. La commande à roulement est par exemple fixée à un levier de commande d'un distributeur hydraulique de la servocommande 15.

D'autres réalisations sont bien sûr envisageables. A titre d'exemple, une commande à roulement peut être reliée à un moteur commandé par des commandes de vol électriques, à deux bielles, à deux moyens de renvoi etc...

Quel que soit le mode de réalisation de l'invention et en référence à la figure 2, une commande à roulement 20 comprend une gaine extérieure 50 creuse. Cette gaine extérieure est munie d'une portion centrale 51 tubulaire.

Une telle portion centrale 51 peut comporter différentes couches. Par exemple, la portion centrale comporte un tube en métal flexible recouvert d'un tube de protection en plastique.

De plus, la gaine extérieure 50 comporte deux embouts 55 creux disposés longitudinalement de part et d'autre de la portion centrale 51. La gaine extérieure 50 comporte alors longitudinalement et successivement un embout 55 dit « premier embout 551 », une portion centrale 51 puis un embout 55 dit « deuxième embout 552 ». Le premier embout 551 et le deuxième embout 552 sont solidarisés à la portion centrale 51, par exemple en étant sertis à cette portion centrale.

Chaque embout 55 comporte un corps central 56 tubulaire. Chaque corps central 56 s'étend longitudinalement au moins d'une butée 57 dite « butée proximale 571, 572 » vers une butée 58 dite « butée distale 581, 582 libre ». La butée distale est qualifiée de « libre » dans la mesure où cette butée distale est agencée à une extrémité libre du corps central, par opposition à l'extrémité du corps central reliée à la portion centrale de la gaine extérieure.

La butée proximale peut être solidarisée à la gaine extérieure. Toutefois, selon la réalisation de la figure 2, la butée proximale est interposée entre le corps central 56 et un tube de raccordement 600. La gaine extérieure est alors par exemple sertie à ce tube de raccordement.

La butée distale, la butée proximale, le corps central et le tube de raccordement peuvent constituer des parties différentes d'une pièce monobloc.

Toutefois, la butée distale, et/ou la butée proximale, et/ou le corps central et/ou le tube de raccordement peuvent constituer des pièces différentes fixées les unes aux autres.

Par exemple, la butée proximale ainsi que le tube de raccordement et le corps central sont des parties constitutives d'une première pièce mécanique. La butée distale représente alors une deuxième pièce mécanique fixée à la première pièce mécanique.

Par ailleurs, chaque butée 57, 58 d'un embout 55 saille du corps central 56 de cet embout vers un milieu EXT extérieur à la commande à roulement 20. La butée proximale et la butée distale d'un embout représentent par exemple deux épaulements du corps central entre lesquels des organes peuvent être coincés.

En particulier, chaque butée peut saillir transversalement du corps central.

Selon l'exemple de la figure 2, chaque butée peut saillir radialement du corps central. En effet, chaque corps central 56 comprend selon cet exemple un cylindre s'étendant en épaisseur d'une face intérieure 59 vers une face extérieure 60. La face extérieure décrit un cercle présentant un diamètre dit « diamètre central 801 ». Au moins une butée 57, 58 prend alors la forme d'un anneau inscrit dans un cercle présentant un diamètre dit « diamètre externe » qui est supérieur au diamètre central.

Par ailleurs, chaque embout 55 comporte un système élastique 65 qui est agencé autour du corps central 56 entre la butée proximale 57 et la butée distale 58 de cet embout 55. Le système élastique 65 peut comprendre au moins un ressort.

De plus, chaque embout 55 comporte une bague 70 qui est agencée autour du corps central 56 entre la butée proximale 57 et la butée distale 58 de cet embout 55. Le corps central d'un embout est mobile longitudinalement en translation par rapport à un axe de symétrie de la bague 70 de cet embout. Plus précisément, le corps central est mobile le long d'un axe de symétrie de la bague qui entoure ce corps central.

Une telle bague peut être une bague à portée sphérique d'une articulation à rotule 80. Dès lors, la bague peut comprendre une bille agencée dans une cage extérieure 75 de l'articulation à rotule 80, cette cage étant solidarisée à une structure 76.

Dès lors, chaque système élastique 65 s'étend entre une butée d'un embout et la bague de cet embout.

Plus précisément, le système élastique 65 d'un embout est au moins relié à la butée distale et à la bague de cet embout, et le système élastique 65 de l'autre embout est au moins relié à la butée proximale et à la bague de cet autre embout.

Par suite, la gaine extérieure comporte un embout dit « premier embout 551 ». Ce premier embout 551 comporte un corps central dit « premier corps central 561 » portant une butée proximale dite « première butée proximale 571 » et une butée distale dite « première butée distale 581 ». Un système élastique dit « premier système élastique 651 » et une bague dite « première bague 701 » entourent au moins partiellement le premier corps central 561.

En outre, la gaine extérieure comporte un embout dit « deuxième embout 552 ». Ce deuxième embout 552 comporte un corps central dit « deuxième corps central 562 » portant une butée proximale dite « deuxième butée proximale 572 » et une butée distale dite « deuxième butée distale 582 ». Un système élastique dit « deuxième système élastique 652 » et une bague dite « deuxième bague 702 » entourent au moins partiellement le deuxième corps central 562.

De plus, la commande à roulement comporte une lamelle centrale 40 traversant de part en part la gaine extérieure 50.

La lamelle centrale 40 s'étend longitudinalement d'une première zone d'extrémité 41 vers une deuxième zone d'extrémité 42. La première zone d'extrémité 41 saille du premier embout 551 de la gaine extérieure 50 pour être solidarisée par des moyens de fixation usuels à un organe mobile de la première section 16. De même, la deuxième zone d'extrémité 42 saille du deuxième embout 552 de la gaine extérieure 50 pour être solidarisée par des moyens de fixation usuels à un organe mobile de la deuxième section 17. De tels moyens de fixation peuvent inclure un moyen de vissage, de soudage, de collage, d'assemblage mécanique tel qu'une broche par exemple.

La lamelle centrale 40 peut comporter un tronçon intermédiaire 43 s'étendant entre deux tronçons extrémaux 47. Chaque tronçon extrémal 47 matérialise une zone d'extrémité de la lamelle centrale 40. Dès lors, la lamelle centrale 40 comporte longitudinalement et successivement un tronçon extrémal 47 dit « premier tronçon extrémal 471 » matérialisant la première zone d'extrémité 41, le tronçon intermédiaire 43, et un tronçon extrémal dit « deuxième tronçon extrémal 472 » matérialisant la deuxième zone d'extrémité 42.

Le tronçon intermédiaire 43 s'étend en outre en élévation d'une face supérieure 45 vers d'une face inférieure 44. Dès lors, le tronçon intermédiaire 43 présente une épaisseur dite « première épaisseur 46 » entre la face inférieure 44 et la face supérieure 45.

De même, chaque tronçon extrémal 47 de la lamelle centrale 40 présente une épaisseur dite « deuxième épaisseur » 48 selon une direction en élévation. La deuxième épaisseur 48 sépare ainsi en élévation une face supérieure d'une face inférieure du tronçon extrémal.

Par suite, la deuxième épaisseur 48 d'un tronçon extrémal est favorablement supérieure à la première épaisseur 46 du tronçon central. Cette caractéristique permet d'obtenir des tronçons extrémaux présentant une raideur supérieure à la raideur du tronçon central.

Par ailleurs, la lamelle centrale 40 est mobile longitudinalement par rapport à la gaine extérieure 50.

Pour cette raison, la commande à roulement comporte deux rangées 30 d'organes de roulement. Ces deux rangées 30 sont agencées dans la portion centrale 51 de la gaine extérieure 50. Les rangées 30 d'organes de roulement sont disposées en élévation de part et d'autre de la lamelle centrale. De plus, les rangées 30 d'organes de roulement sont disposées longitudinalement entre le premier embout 551 et le deuxième embout 552.

Chaque rangée 30 comporte des organes de maintien 32 définissant des cages, les organes de roulement se trouvant dans ces cages. De tels organes de roulement comprennent par exemple des billes 31.

Par conséquent, une rangée supérieure 33 d'organes de roulement est agencée entre la face supérieure 45 de la lamelle centrale 40 et une face interne 52 de la gaine extérieure 50. De même, une rangée inférieure 34 d'organes de roulement est agencée entre la face inférieure 44 de la lamelle centrale 40 et une face interne 52 de la gaine extérieure 50.

Eventuellement, la face supérieure et la face inférieure de la lamelle centrale présentent chacune une rainure, les organes de roulement reposant dans ces rainures.

Par ailleurs, une éclisse 35 est interposée en élévation entre chaque rangée 30 d'organes de roulement et la face interne 52 de la gaine extérieure. De plus, les éclisses sont disposées longitudinalement entre le premier embout 551 et le deuxième embout 552.

Dès lors, une éclisse 35 dite « éclisse supérieure 37 » est agencée entre la rangée supérieure 33 d'organes de roulement et la gaine extérieure. Une éclisse 35 dite « éclisse inférieure 36 » est agencée entre la rangée inférieure 34 d'organes de roulement et la gaine extérieure.

En référence à la figure 3, la commande à roulement comporte successivement en élévation et au sein de la portion centrale 51 de la gaine extérieure : une éclisse inférieure 36, une rangée inférieure 34 d'organes de roulement, la lamelle centrale 40, une rangée supérieure 33 d'organes de roulement, et une éclisse supérieure 37.

En référence à la figure 2, la commande à roulement 20 est alors agencée entre une première section 16 et une deuxième section 17 d'une chaîne de transmission d'un mouvement 10.

La lamelle centrale est alors fixée d'une part à la première section 16 et d'autre part à la deuxième section 17.

La première butée distale 581 du premier embout 551 est alors en regard de la première section 16, cette première butée distale 581 n'étant néanmoins pas en contact avec cette première section.

De même, la deuxième butée distale 582 libre du deuxième embout 552 est en regard de la deuxième section 17, cette deuxième butée distale 582 n'étant néanmoins pas en contact avec cette deuxième section.

Par suite, aucun embout de la gaine extérieure n'est en contact avec la première section 16 et la deuxième section 17.

Selon le premier mode de réalisation de la figure 2, chaque système élastique comporte un unique organe élastique qui s'étend entre une butée d'un embout et la bague entourant cet embout.

Dès lors, le premier système élastique 651 est en appui longitudinalement contre la première butée distale 581 et la première bague 701 pour tendre à plaquer la première bague 701 contre la première butée proximale 571. Le deuxième système élastique 652 est en appui longitudinalement contre la deuxième butée proximale 572 et la deuxième bague 702 pour tendre à plaquer la deuxième bague 702 contre la deuxième butée distale 582. Chaque système élastique s'étend en outre à partir d'une butée selon un sens allant du deuxième embout vers le premier embout.

Dans des conditions normales de fonctionnement, la lamelle centrale 40 se déplace en translation longitudinale par rapport à la gaine extérieure 50.

Par exemple, un déplacement de la première section 16 selon la flèche F1 induit un déplacement de même intensité de la lamelle centrale selon la flèche F2, la lamelle centrale induisant un mouvement de même intensité dans la deuxième section 17 selon la flèche F3. La première section, la lamelle centrale et la deuxième section peuvent donc se déplacer sur une même amplitude, et éventuellement selon une même direction ou des directions différentes.

Par contre, en cas de blocage de la section commandée par la commande à roulement, la gaine extérieure réalise aussi un mouvement en translation.

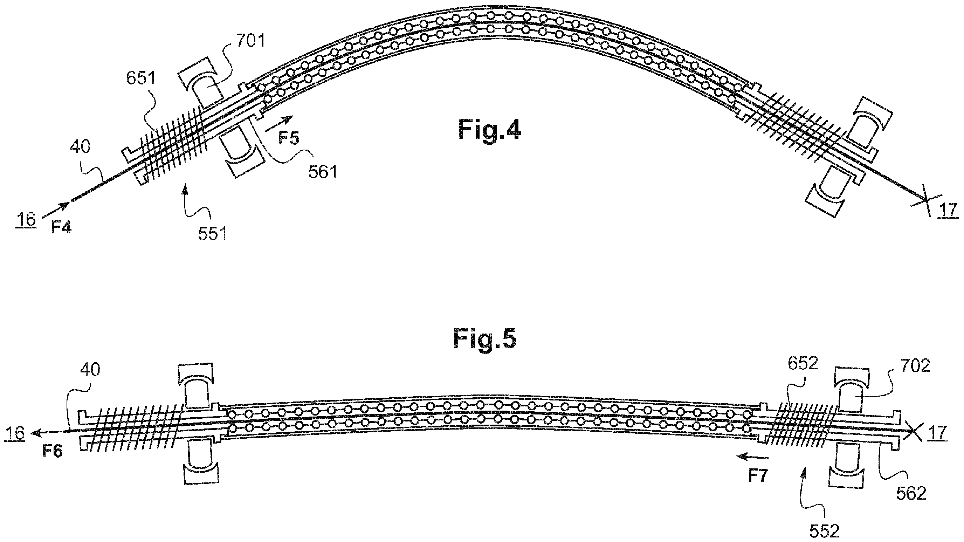

En référence à la figure 4, la première section 16 peut requérir un déplacement de la lamelle centrale 40 selon la flèche F4. En cas de blocage de la deuxième section 17 représenté par une croix, la lamelle centrale 40 subit un effort de compression.

La forme extérieure de la lamelle centrale est alors modifiée. Cette modification induit le déplacement de la gaine extérieure par le biais du déplacement d'un embout par rapport à la bague de cet embout.

En particulier, le premier embout 551 est sollicité selon la figure 4. Le premier corps central 561 se déplace alors par rapport à la première bague 701 en comprimant le premier système élastique 651. Ce déplacement du premier corps central tend à limiter les efforts exercés dans la portion centrale 51 de la gaine extérieure.

En référence à la figure 5, la première section 16 peut requérir un déplacement de la lamelle centrale 40 selon la flèche F6. En cas de blocage de la deuxième section 17 représenté par une croix, la lamelle centrale 40 subit un effort de traction.

La lamelle centrale est alors déformée. Cette déformation induit le déplacement de la gaine extérieure par le biais du déplacement d'un embout par rapport à la bague de cet embout.

En particulier, le deuxième embout 552 est sollicité selon la figure 5. Le deuxième corps central 562 se déplace alors par rapport à la deuxième bague 702 en comprimant le deuxième système élastique 652. Ce déplacement du deuxième corps central tend à limiter les efforts exercés dans la portion centrale 51 de la gaine extérieure. Ce déplacement tend ainsi à protéger la gaine extérieure si un incident se produit, tel qu'un blocage de la deuxième section par exemple.

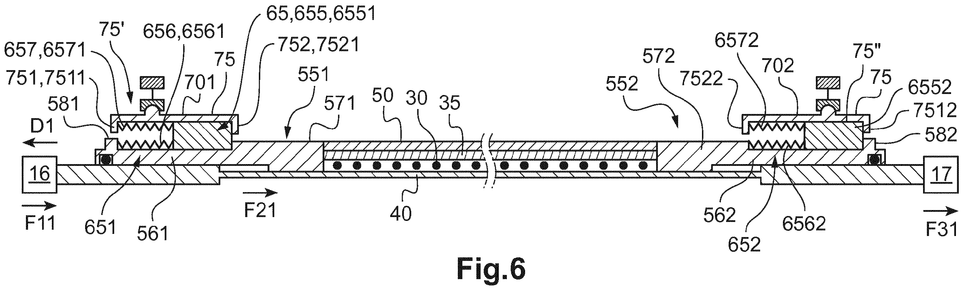

La figure 6 illustre un deuxième mode de réalisation.

Au moins une bague comporte une mâchoire munie d'une surface d'arrêt dite « surface d'arrêt distale 751 » et d'une surface d'arrêt dite « surface d'arrêt proximale 752 ». Chaque surface d'arrêt s'étend transversalement de la mâchoire vers un embout sans toucher cet embout. En particulier, la surface d'arrêt distale s'étend vers la butée distale d'un embout, et la surface d'arrêt proximale s'étend vers la butée proximale d'un embout.

De plus, la mâchoire porte une bille apte à coopérer avec une cage sphérique.

Dès lors, un système élastique 65 comporte un organe élastique interne 656 ainsi qu'un organe élastique externe 657 et un coulisseau 655. L'organe élastique interne 656 et l'organe élastique externe 657 s'étendent chacun à partir du coulisseau 655 selon un même sens D1, par exemple un sens allant du deuxième embout vers le premier embout. De plus, l'organe élastique interne 656 s'étend entre le coulisseau 655 et une butée de l'embout correspondant, alors que l'organe élastique externe 657 s'étend entre le coulisseau 655 et une surface d'arrêt d'une mâchoire.

Par suite, un organe élastique interne dit « premier organe élastique interne 6561 » s'étend entre un coulisseau dit « premier coulisseau 6551 » et la première butée distale 581 du premier embout pour tendre à pousser ce premier coulisseau 6551 contre la première butée proximale 571 du premier embout 551. Un organe élastique externe dit « premier organe élastique externe 6571 » s'étend entre le premier coulisseau 6551 et une surface d'arrêt distale 7511 d'une mâchoire dite « première mâchoire 75' » pour tendre à pousser ce premier coulisseau 6551 contre la surface d'arrêt proximale 7521 de la première mâchoire 75'.

Un organe élastique interne dit « deuxième organe élastique interne 6562 » s'étend entre un coulisseau dit « deuxième coulisseau 6552 » et la deuxième butée proximale 572 du deuxième embout 552 pour tendre à pousser ce deuxième coulisseau 6552 contre la deuxième butée distale 582 du deuxième embout 552. Un organe élastique externe dit « deuxième organe élastique externe 6572 » s'étend entre le deuxième coulisseau 6552 et une surface d'arrêt proximale 7522 d'une mâchoire dite « deuxième mâchoire 75" » pour tendre à pousser ce deuxième coulisseau 6552 contre la surface d'arrêt distale 7512 de la deuxième mâchoire 75".

A l'équilibre, chaque surface d'arrêt proximale tend à être agencée au droit d'une butée proximale, et chaque surface d'arrêt distale tend à être agencée au droit d'une butée distale.

Dans des conditions normales de fonctionnement, la lamelle centrale 40 se déplace en translation longitudinale par rapport à la gaine extérieure 50.

Par exemple, un déplacement de la première section 16 selon la flèche F11 induit un déplacement de même intensité de la lamelle centrale selon la flèche F21, la lamelle centrale induisant un mouvement de même intensité dans la deuxième section 17 selon la flèche F31. La première section, la lamelle centrale et la deuxième section peuvent donc se déplacer sur une même amplitude, et éventuellement selon une même direction ou des directions différentes.

Par contre, en cas de blocage de la deuxième section, la gaine extérieure réalise aussi un mouvement en translation.

La forme extérieure de la lamelle centrale est alors modifiée. Cette modification induit le déplacement de la gaine extérieure par le biais du déplacement d'au moins un embout par rapport à la bague de cet embout.

Par exemple, le premier embout 551 est sollicité. Le premier corps central 561 se déplace alors par rapport à la première bague 701 et au premier coulisseau en comprimant le premier organe élastique interne 6561. Ce déplacement du premier corps central tend à limiter les efforts exercés dans la portion centrale de la gaine extérieure.

De même, le deuxième embout 552 peut être sollicité. Le deuxième corps central 562 se déplace alors par rapport à la deuxième bague 702 et au deuxième coulisseau en comprimant le deuxième organe élastique interne 6562 et le deuxième organe élastique externe 6572. Ce déplacement du deuxième corps central tend à limiter les efforts exercés dans la portion centrale de la gaine extérieure.

De plus, le deuxième mode de réalisation peut aussi présenter l'avantage de préserver la commande en cas de grippage d'organes de roulement.

Par exemple, un effort entraîne un déplacement de la lamelle centrale 40 vers la gauche selon la figure 6.

Le grippage d'organes de roulement tend à induire un déplacement similaire des éclisses 35, du premier embout 551 et du deuxième embout 552. Ce déplacement est autorisé par la compression des premiers organes élastiques interne 6561 et externe 6571 du premier système élastique 651, et du deuxième organe élastique externe 6572 du deuxième système élastique 652.

En cas de déplacement de la lamelle centrale 40 vers la droite selon la figure 6, le grippage d'organes de roulement tend à induire un déplacement similaire des éclisses 35, du premier embout 551 et du deuxième embout 552. Ce déplacement est autorisé par la compression du premier organe élastique interne 6561 du premier système élastique 651, et du deuxième organe élastique interne 6562 du deuxième système élastique 652.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Commande à roulement (20) équipée d'une gaine extérieure (50) entourant une lamelle centrale (40) mobile longitudinalement par rapport à la gaine extérieure (50), ladite lamelle centrale (40) étant agencée entre deux rangées (30) d'organes de roulement (31), chaque rangée (30) d'organes de roulement (31) étant agencée entre une face (44, 45) de la lamelle centrale (40) et une éclisse (35) qui est en regard d'une face interne (52) de ladite gaine extérieure (50), ladite gaine extérieure (50) comportant une portion centrale (51) s'étendant entre un embout (55) dit « premier embout (551) » et un embout dit « deuxième embout (552),
**caractérisée en ce que** chaque embout (55) comporte un corps central (56) creux qui entoure la lamelle centrale (40), chaque corps central (56) s'étendant longitudinalement au moins d'une butée (57) dite « butée proximale (571, 572) » vers une butée (58) dite « butée distale (581, 582) » libre, chaque butée (57, 58) d'un embout (55) saillant dudit corps central (56) de cet embout vers un milieu (EXT) extérieur à la commande à roulement (20), chaque embout (55) comportant un système élastique (65) interposé autour du corps central (56) de cet embout (55) entre une butée de l'embout (55) et une bague (70), chaque bague étant agencée autour du corps central de l'embout associé, chaque embout étant mobile en translation par rapport à la bague entourant cet embout, le système élastique (65) d'un embout (551) étant agencé entre la butée distale (581) et la bague (70) de cet embout (551) et le système élastique (65) de l'autre embout (552) étant agencé entre la butée proximale (572) et la bague (70) de cet autre embout (552).

2. Commande à roulement selon la revendication 1, **caractérisée en ce que** chaque rangée (30) d'organes de roulement (31) s'étend entre le premier embout (551) et le deuxième embout (552).

3. Commande à roulement selon l'une quelconque des revendications 1 à 2,
**caractérisée en ce que** chaque éclisse (35) s'étend entre le premier embout (551) et le deuxième embout (552).

4. Commande à roulement selon l'une quelconque des revendications 1 à 3,
**caractérisée en ce qu'**au moins une bague (70) est une bague à portée sphérique d'une articulation à rotule (80).

5. Commande à roulement selon l'une quelconque des revendications 1 à 4,
**caractérisée en ce qu'**au moins un desdits systèmes élastiques (65) comporte un organe élastique s'étendant entre une butée d'un embout et la bague entourant cet embout.

6. Commande à roulement selon l'une quelconque des revendications 1 à 4,
**caractérisée en ce que**, au moins une bague comportant une mâchoire munie d'une surface d'arrêt dite « surface d'arrêt distale (751) » et d'une surface d'arrêt dite « surface d'arrêt proximale (752) », au moins un desdits systèmes élastiques (65) comporte un organe élastique interne (656) ainsi qu'un organe élastique externe (657) et un coulisseau (655), ledit organe élastique interne (656) et ledit organe élastique externe (657) s'étendant à partir dudit coulisseau (655) selon un même sens (D1), ledit organe élastique interne (656) s'étendant entre le coulisseau (655) et une dite butée d'un embout et ledit organe élastique externe (657) s'étendant entre ledit coulisseau (655) et une surface d'arrêt d'une mâchoire.

7. Commande à roulement selon la revendication 6, **caractérisée en ce que** :
- un organe élastique interne dit « premier organe élastique interne (6561) » s'étend entre un coulisseau dit « premier coulisseau (6551) » et la butée distale (581) du premier embout pour tendre à pousser ce premier coulisseau (6551) contre la butée proximale (571) du premier embout (551), un organe élastique externe dit « premier organe élastique externe (6571) » s'étendant entre ledit premier coulisseau (6551) et une surface d'arrêt distale (7511) d'une mâchoire dite « première mâchoire (75') » pour tendre à pousser ce premier coulisseau (6551) contre la surface d'arrêt proximale (7521) de la première mâchoire (75'),
- un organe élastique interne dit « deuxième organe élastique interne (6562) » s'étend entre un coulisseau dit « deuxième coulisseau (6552) » et la butée proximale (572) du deuxième embout (552) pour tendre à pousser ce deuxième coulisseau (6552) contre la butée distale (582) du deuxième embout (552), un organe élastique externe dit « deuxième organe élastique externe (6572) » s'étendant entre ledit deuxième coulisseau (6552) et une surface d'arrêt proximale (7522) d'une mâchoire dite « deuxième mâchoire (75") » pour tendre à pousser ce deuxième coulisseau (6552) contre la surface d'arrêt distale (7512) de la deuxième mâchoire (75").

8. Commande à roulement selon l'une quelconque des revendications 1 à 7,
**caractérisée en ce que** ladite portion centrale (51) est flexible, chaque corps central (56) étant rigide.

9. Commande à roulement selon l'une quelconque des revendications 1 à 8,
**caractérisée en ce que** ladite lamelle centrale (40) présente un tronçon intermédiaire (43) s'étendant en épaisseur d'une face supérieure (45) en regard d'une rangée (33) d'organes de roulement (31) vers une face inférieure (44) en regard de l'autre rangée (34) d'organes de roulement (31), ledit tronçon intermédiaire (43) présentant une première épaisseur (46) entre ladite face inférieure (44) et ladite face supérieure (45), ledit tronçon intermédiaire (43) s'étendant entre deux tronçons extrémaux (47) de la lamelle centrale (40), chaque tronçon extrémal (47) présentant une deuxième épaisseur (48) supérieure à la première épaisseur (46).

10. Commande à roulement selon la revendication 9,
**caractérisée en ce que** chaque tronçon extrémal (47) saille en dehors d'un embout (55).

11. Commande à roulement selon l'une quelconque des revendications 1 à 10,
**caractérisée en ce que**, chaque corps central (56) comprenant un cylindre s'étendant en épaisseur d'une face intérieure (59) dirigée vers la lamelle centrale (40) vers une face extérieure (60), la face extérieure décrivant un cercle présentant un diamètre dit « diamètre central », au moins une butée (57, 58) comporte un anneau inscrit dans un cercle présentant un diamètre dit « diamètre externe », ledit diamètre externe étant supérieur au diamètre central.

12. Système mécanique (5) muni d'une commande à roulement (20) qui est interposée entre une première section (16) et une deuxième section (17) d'une chaîne de transmission d'un mouvement (10),
**caractérisée en ce que** ladite commande à roulement (20) est selon l'une quelconque des revendications 1 à 11, ladite butée distale (58) libre du premier embout (551) étant en regard de la première section (16) et ladite butée distale (58) libre du deuxième embout (552) étant en regard de la deuxième section (17), ladite lamelle centrale (40) étant solidaire de la première section (16) et de la deuxième section (17).

13. Système mécanique selon la revendication 12,
**caractérisée en ce qu'**aucun embout (55, 551, 552) n'est en contact avec la première section (16) et la deuxième section (17).

14. Aéronef (1),
**caractérisé en ce que** ledit aéronef (1) comporte un système mécanique (5) selon la revendication 12.

## Patentansprüche

1. Steuerung mit einem Lager (20), die mit einer äußeren Hülle (50) versehen ist, die eine zentrale Lamelle (40) umgibt, die in Längsrichtung relativ zu der äußeren Hülle (50) beweglich ist, wobei die zentrale Lamelle (40) zwischen zwei Reihen (30) von Rollkörpern (31) angeordnet ist, wobei jede Reihe (30) von Rollkörpern (31) zwischen einer Seite (44, 45) der zentralen Lamelle (40) und einer Schiene (35) angeordnet ist, die einer Innenseite (52) der äußeren Hülle (50) gegenüberliegt, wobei die äußere Hülle (50) einen zentralen Bereich (51) aufweist, der sich zwischen einer "erste Endkappe (551)" genannten Endkappe (55) und einer "zweite Endkappe (552)" genannten Endkappe erstreckt,
**dadurch gekennzeichnet, dass** jede Endkappe (55) einen zentralen Hohlkörper (56) aufweist, der die zentrale Lamelle (40) umgibt, wobei jeder zentrale Körper (56) sich in Längsrichtung mindestens von einem "proximaler Anschlag (571, 572)" genannten Anschlag (57) zu einem "distaler Anschlag (581, 582)" genannten freien Anschlag (58) erstreckt, wobei jeder Anschlag (57, 58) einer Endkappe (55) gegenüber dem zentralen Körper (56) dieser Endkappe nach außerhalb (EXT) der Steuerung mit Lager (20) vorsteht, wobei jede Endkappe (55) ein elastisches System (65) aufweist, das um den zentralen Körper (56) dieser Endkappe (55) herum zwischen einem Anschlag der Endkappe (55) und einem Ring (70) angeordnet ist, wobei jeder Ring um den zentralen Körper der zugehörigen Endkappe angeordnet ist, wobei jede Endkappe relativ zu dem Ring, der diese Endkappe umgibt, translatorisch beweglich ist, wobei das elastische System (65) einer Endkappe (551) zwischen dem distalen Anschlag (581) und dem Ring (70) dieser Endkappe (551) angeordnet ist, und das elastische System (65) der anderen Endkappe (552) zwischen dem proximalen Anschlag (572) und dem Ring (70) dieser anderen Endkappe (552) angeordnet ist.

2. Steuerung mit Lager nach Anspruch 1,
**dadurch gekennzeichnet, dass** sich jede Reihe (30) von Rollkörpern (31) zwischen der ersten Endkappe (551) und der zweiten Endkappe (552) erstreckt.

3. Steuerung mit Lager nach einem der Ansprüche 1 bis 2,
**dadurch gekennzeichnet, dass** jede Schiene (35) sich zwischen der ersten Endkappe (551) und der zweiten Endkappe (552) erstreckt.

4. Steuerung mit Lager nach einem der Ansprüche 1 bis 3,
**dadurch gekennzeichnet, dass** mindestens ein Ring (70) ein Ring mit sphärischer Gleitfläche eines Kugelgelenks (80) ist.

5. Steuerung mit Lager nach einem der Ansprüche 1 bis 4,
**dadurch gekennzeichnet, dass** mindestens eines der elastischen Systeme (65) einen elastischen Körper aufweist, der sich zwischen einem Anschlag einer Endkappe und dem Ring, der diese Endkappe umgibt, erstreckt.

6. Steuerung mit Lager nach einem der Ansprüche 1 bis 4,
**dadurch gekennzeichnet, dass** mindestens ein Ring eine Klaue aufweist, die mit einer "distale Stopperfläche (751)" genannten Stopperfläche und einer "proximale Stopperfläche (752)" genannten Stopperfläche versehen ist, wobei mindestens eines der elastischen Systeme (65) einen inneren elastischen Körper (656) sowie einen äußeren elastischen Körper (657) und einen Schieber (655) aufweist, wobei der innere elastische Körper (656) und der äußere elastische Körper (657) sich ausgehend von dem Schieber (655) in eine selbe Richtung (D1) erstrecken, wobei der innere elastische Körper (656) sich zwischen dem Schieber (655) und einem Anschlag einer Endkappe erstreckt, und der äußere elastische Körper (657) sich zwischen dem Schieber (655) und einer Stopperfläche einer Klaue erstreckt.

7. Steuerung mit Lager nach Anspruch 6,
**dadurch gekennzeichnet, dass**:
- ein "erster innerer elastischer Körper (6561)" genannter innerer elastischer Körper sich zwischen einem "erster Schieber (6551)" genannten Schieber und dem distalen Anschlag (581) der ersten Endkappe erstreckt, um diesen ersten Schieber (6551) gegen den proximalen Anschlag (571) der ersten Endkappe (551) zu schieben, wobei ein "erster äußerer elastischer Körper (6571)" genannter äußerer elastischer Körper sich zwischen dem ersten Schieber (6551) und einer distalen Stopperfläche (7511) einer "erste Klaue (75')" genannten Klaue erstreckt, um den ersten Schieber (6551) gegen die proximale Stopperfläche (7521) der ersten Klaue (75') zu schieben,
- ein "zweiter innerer elastischer Körper (6562)" genannter innerer elastischer Körper sich zwischen einem "zweiter Schieber (6552)" genannten Schieber und dem proximalen Anschlag (572) der zweiten Endkappe (552) erstreckt, um diesen zweiten Schieber (6552) gegen den distalen Anschlag (582) der zweiten Endkappe (552) zu schieben, wobei ein "zweiter äußerer elastischer Körper (6572)" genannter äußerer elastischer Körper sich zwischen dem zweiten Schieber (6552) und einer proximalen Stopperfläche (7522) einer "zweite Klaue (75")" genannten Klaue erstreckt, um den zweiten Schieber (6552) gegen die distale Stopperfläche (7512) der zweiten Klaue (75") zu schieben.

8. Steuerung mit Lager nach einem der Ansprüche 1 bis 7,
**dadurch gekennzeichnet, dass** der zentrale Bereich (51) flexibel ist, wobei jeder zentrale Körper (56) unnachgiebig ist.

9. Steuerung mit Lager nach einem der Ansprüche 1 bis 8,
**dadurch gekennzeichnet, dass** die zentrale Lamelle (40) einen Zwischenabschnitt (43) aufweist, der sich in Dickenrichtung von einer oberen Fläche (45), die gegenüber einer Reihe (33) von Rollkörpern (31) liegt, zu einer unteren Fläche (44), die gegenüber der anderen Reihe (34) von Rollkörpern (31) liegt, erstreckt, wobei der Zwischenabschnitt (43) eine erste Dicke (46) zwischen der unteren Seite (44) und der oberen Seite (45) aufweist, wobei der Zwischenabschnitt (43) sich zwischen zwei Endabschnitten (47) der zentralen Lamelle (40) erstreckt, wobei jeder Endabschnitt (47) eine zweite Dicke (48) aufweist, die größer als die erste Dicke (46) ist.

10. Steuerung mit Lager nach Anspruch 9,
**dadurch gekennzeichnet, dass** jeder Endabschnitt (47) aus einer Endkappe (55) herausragt.

11. Steuerung mit Lager nach einem der Ansprüche 1 bis 10,
**dadurch gekennzeichnet, dass** jeder zentrale Körper (56) einen Zylinder aufweist, der sich in Dickenrichtung von einer Innenseite (59), die auf die zentrale Lamelle (40) gerichtet ist, zu einer Außenseite (60) erstreckt, wobei die Außenseite einen Kreis umschreibt, der einen "zentraler Durchmesser" genannten Durchmesser aufweist, wobei mindestens ein Anschlag (57, 58) einen Ring aufweist, der in einen Kreis eingeschrieben ist, der einen "äußerer Durchmesser" genannten Durchmesser aufweist, wobei der äußere Durchmesser größer ist als der zentrale Durchmesser.

12. Mechanisches System (5) mit einer Steuerung mit Lager (20), die zwischen einem ersten Abschnitt (16) und einem zweiten Abschnitt (17) einer Bewegungsübertragungskette (10) angeordnet ist,
**dadurch gekennzeichnet, dass** die Steuerung mit Lager (20) eine Steuerung gemäß einem der Ansprüche 1 bis 11 ist, wobei der freie distale Anschlag (58) der ersten Endkappe (551) gegenüber dem ersten Abschnitt (16) und der freie distale Anschlag (58) der zweiten Endkappe (552) gegenüber dem zweiten Abschnitt (17) liegt, wobei die zentrale Lamelle (40) mit dem ersten Abschnitt (16) und dem zweiten Abschnitt (17) fest verbunden ist.

13. Mechanisches System nach Anspruch 12,
**dadurch gekennzeichnet, dass** keine Endkappe (55, 551, 552) in Kontakt mit dem ersten Abschnitt (16) und dem zweiten Abschnitt (17) ist.

14. Luftfahrzeug (1),
**dadurch gekennzeichnet, dass** das Luftfahrzeug (1) ein mechanisches System (5) nach Anspruch 12 aufweist.

## Claims

1. Ball-bearing control (20) equipped with an outer sheath (50) which surrounds a central blade (40) that is movable longitudinally relative to the outer sheath (50), said central blade (40) being arranged between two rows (30) of rolling members (31), each row (30) of rolling members (31) being arranged between a face (44, 45) of the central blade (40) and a plate (35) which is opposite an inner face (52) of said outer sheath (50), said outer sheath (50) comprising a central portion (51) which extends between an endpiece (55) referred to as the "first endpiece (551)" and an endpiece referred to as the "second endpiece (552)",
**characterized in that** each endpiece (55) comprises a hollow central body (56) which surrounds the central blade (40), each central body (56) extending longitudinally at least from an abutment (57) referred to as the "proximal abutment (571, 572)" to a free abutment (58) referred to as the "distal abutment (581, 582)", each abutment (57, 58) of an endpiece (55) projecting from said central body (56) of said endpiece towards an external medium (EXT) that is external to the ball-bearing control (20), each endpiece (55) comprising an elastic system (65) interposed around the central body (56) of said endpiece (55) between an abutment of the endpiece (55) and a ring (70), each ring being arranged around the central body of the associated endpiece, each endpiece being movable in translation relative to the ring surrounding said endpiece, the elastic system (65) of one endpiece (551) being arranged between the distal abutment (581) and the ring (70) of said endpiece (551), and the elastic system (65) of the other endpiece (552) being arranged between the proximal abutment (572) and the ring (70) of said other endpiece (552).

2. Ball-bearing control according to claim 1, **characterized in that** each row (30) of rolling members (31) extends between the first endpiece (551) and the second endpiece (552).

3. Ball-bearing control according to any one of claims 1 to 2, **characterized in that** each plate (35) extends between the first endpiece (551) and the second endpiece (552).

4. Ball-bearing control according to any one of claims 1 to 3, **characterized in that** at least one ring (70) is a spherical bearing ring of a ball joint (80).

5. Ball-bearing control according to any one of claims 1 to 4, **characterized in that** at least one of said elastic systems (65) comprises an elastic member which extends between an abutment of an endpiece and the ring surrounding said endpiece.

6. Ball-bearing control according to any one of claims 1 to 4, **characterized in that** at least one ring comprises a jaw having a stop surface referred to as the "distal stop surface (751)" and a stop surface referred to as the "proximal stop surface (752)", and at least one of said elastic systems (65) comprises an inner elastic member (656) as well as an outer elastic member (657) and a slide (655), said inner elastic member (656) and said outer elastic member (657) extending from said slide (655) in the same direction (D1), said inner elastic member (656) extending between the slide (655) and an abutment of an endpiece, and said outer elastic member (657) extending between said slide (655) and a stop surface of a jaw.

7. Ball-bearing control according to claim 6, **characterized in that**:
- an inner elastic member referred to as the "first inner elastic member (6561)" extends between a slide referred to as the "first slide (6551)" and the distal abutment (581) of the first endpiece in order to tend to push said first slide (6551) against the proximal abutment (571) of the first endpiece (551), an outer elastic member referred to as the "first outer elastic member (6571)" extending between said first slide (6551) and a distal stop surface (7511) of a jaw referred to as the "first jaw (75')" in order to tend to push said first slide (6551) against the proximal stop surface (7521) of the first jaw (75'),
- an inner elastic member referred to as the "second inner elastic member (6562)" extends between a slide referred to as the "second slide (6552)" and the proximal abutment (572) of the second endpiece (552) in order to tend to push said second slide (6552) against the distal abutment (582) of the second endpiece (552), an outer elastic member referred to as the "second outer elastic member (6572)" extending between said second slide (6552) and a proximal stop surface (7522) of a jaw referred to as the "second jaw (75")" in order to tend to push said second slide (6552) against the distal stop surface (7512) of the second jaw (75").

8. Ball-bearing control according to any one of claims 1 to 7, **characterized in that** said central portion (51) is flexible, each central body (56) being rigid.

9. Ball-bearing control according to any one of claims 1 to 8, **characterized in that** said central blade (40) has an intermediate segment (43) extending in thickness from a top face (45) facing one row (33) of rolling members (31) to a bottom face (44) facing the other row (34) of rolling members (31), said intermediate segment (43) having a first thickness (46) between said bottom face (44) and said top face (45), said intermediate segment (43) extending between two end segments (47) of the central blade (40), each end segment (47) having a second thickness (48) that is greater than the first thickness (46).

10. Ball-bearing control according to claim 9, **characterized in that** each end segment (47) projects beyond an endpiece (55).

11. Ball-bearing control according to any one of claims 1 to 10, **characterized in that** each central body (56) comprises a cylinder extending in thickness from an inner face (59) directed towards the central blade (40) to an outer face (60), the outer face describing a circle having a diameter referred to as the "central diameter", and at least one abutment (57, 58) comprises an annulus inscribed within a circle having a diameter referred to as the "external diameter", said external diameter being greater than the central diameter.

12. Mechanical system (5) equipped with a ball-bearing control (20) which is interposed between a first section (16) and a second section (17) of a motion transmission chain (10), **characterized in that** said ball-bearing control (20) is in accordance with any one of claims 1 to 11, said free distal abutment (58) of the first endpiece (551) facing the first section (16) and said free distal abutment (58) of the second endpiece (552) facing the second section (17), said central blade (40) being secured to the first section (16) and to the second section (17).

13. Mechanical system according to claim 12, **characterized in that** no endpiece (55, 551, 552) is in contact with the first section (16) and the second section (17).

14. Aircraft (1), **characterized in that** said aircraft (1) comprises a mechanical system (5) according to claim 12.
